# EUROPÄISCHE PATENTANMELDUNG

(11) **EP 1 635 188 A1**
(43) Veröffentlichungstag der Anmeldung: **15.03.2006**
(21) Anmeldenummer: 05106307.1
(22) Anmeldetag: 11.07.2005
(51) Int. Cl.: G01S 13/34

(54) **Verfahren und Vorrichtung zur Entfernungs- und Geschwindigkeitsmessung**

(30) Priorität: 09.09.2004 DE 102004044330
(71) Anmelder: ROBERT BOSCH GMBH, 70442 Stuttgart (DE)
(72) Erfinder: Brosche, Thomas, 70195 Stuttgart (DE)

(57) **Zusammenfassung**

Verfahren und Vorrichtung zur Entfemungs- und Geschwindigkeitsmessung mittels eines Mikrowellensignals, insbesondere für ein Kraftfahrzeug, wobei ein Trägersignal mittels mehrerer frequenzveränderlicher Modulationsfunktionen moduliert wird, dass die mehreren frequenzveränderlichen Modulationsfunktionen identisch und zeitlich zueinander versetzt sind und dass das frequenzmodulierte Mikrowellensignal derart gebildet wird, dass abwechselnd die momentane Frequenz einer der mehreren frequenzveränderlichen Modulationsfunktionen ausgesandt wird, wobei die Sendefrequenz stückweise konstant ist.

## Beschreibung

Die vorliegende Erfindung betrifft ein Verfahren und eine Vorrichtung zur Entfemungs- und Geschwindigkeitsmessung mittels eines Mikrowellensignals, insbesondere für ein Kraftfahrzeug, wobei ein Trägersignal mittels mehrerer frequenzveränderlicher Modulationsfunktionen moduliert wird, wobei die mehreren frequenzveränderlichen Modulationsfunktionen identisch und zeitlich zueinander versetzt sind und dass das frequenzmodulierte Mikrowellensignal derart gebildet wird, dass abwechselnd die momentane Frequenz eines der mehreren frequenzveränderlichen Modulationsfunktionen ausgesandt wird, wobei die Sendefrequenz stückweise konstant ist.

### Stand der Technik

Aus der DE 199 35 265 A1 ist ein System zur Messung des Abstands und der Relativgeschwindigkeit zwischen Objekten mittels elektromagnetischer Wellen bekannt, das Mittel zum Aussenden von elektromagnetischen Wellen von einem ersten Objekt und Mittel zum Empfangen von reflektierten elektromagnetischen Wellen von wenigstens einem zweiten Objekt aufweist, wobei die Frequenz des ausgesendeten Signals derart moduliert wird, dass die Modulationsfrequenz während eines ersten Zeitabschnittes näherungsweise linear von einem ersten auf einen zweiten Modulationsfrequenzwert ansteigt, dass die Modulationsfrequenz während eines zweiten Zeitabschnittes näherungsweise konstant ist, dass die Modulationsfrequenz während eines dritten Zeitabschnittes näherungsweise linear von dem zweiten auf einen dritten Modulationsfrequenzwert abfällt, dass die Modulationsfrequenz während eines vierten Zeitabschnittes näherungsweise konstant ist und dass sich diese Zeitabschnitte mehrfach wiederholen, wobei wenigstens einer der Modulationsfrequenzwerte und/oder die Dauer wenigstens eines Zeitabschnittes veränderbar ist.

### Kern und Vorteile der Erfindung

Der Kern der vorliegenden Erfindung ist es, ein Verfahren und eine Vorrichtung anzugeben, mittels denen bei einem FMCW-Radar die auftretenden Mehrdeutigkeiten zwischen der relativen Geschwindigkeit vᵣₑₗ und dem Abstand d erkannter Objekte, die insbesondere beim Vorhandensein mehrerer erkannter Objekte auftritt, verhindert werden, indem ein Verfahren und eine Vorrichtung verwendet werden, bei der mögliche Objektkombinationen aus Abstand d und Relativgeschwindigkeit vᵣₑₗ, die zu Scheinzielen und realen Zielen in der Auswertung führen, verhindert werden.

Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise handelt es sich bei den Modulationsfunktionen um Geraden. Dies ist von Vorteil, da bei Geraden während der Modulation eine konstante Frequenzsteigung vorhanden ist, die in der Auswertung berücksichtigt werden kann.

Weiterhin ist es vorteilhaft, dass die frequenzveränderlichen Modulationsfunktionen zyklisch wiederholt werden.

Besonders vorteilhaft ist es, dass die frequenzveränderlichen Modulationsfunktionen lineare, sich zyklisch wiederholende Rampen sind, die insbesondere einen sägezahnförmigen Verlauf aufweisen.

Weiterhin ist es vorteilhaft, dass die frequenzveränderlichen Modulationsfunktionen aus mehreren linearen Rampen mit unterschiedlicher Rampensteigung zusammengesetzt sind.

Weiterhin ist es vorteilhaft, dass die mehreren frequenzveränderlichen Modulationsfunktionen zwei oder mehr zeitlich versetzte Modulationsfunktionen sind. Weiterhin ist es vorteilhaft, dass die Anzahl frequenzveränderlicher Modulationsfunktionen, zwischen denen innerhalb einer Rampe zur Modulation des Mikrowellensignals umgeschaltet wird, variiert wird.

Weiterhin ist es vorteilhaft, dass die Zeitdauer zwischen dem Umschalten zwischen zwei Modulationsfunktionen mindestens die Signallaufzeit ist, die das Sendesignal benötigt, um von der Sendeeinrichtung bis zur maximalen zu überwachenden Zielentfernung und zurück zur Empfangseinrichtung zu gelangen.

Vorteilhafterweise sind die Zeitdauern zwischen dem Umschalten zwischen unterschiedlichen Modulationsfunktionen unterschiedlich. Weiterhin ist es vorteilhaft, dass das Empfangssignal abgetastet wird, auf mehrere Empfangskanäle aufgeteilt wird, das Empfangssignal des jeweiligen Empfangskanals geschätzt bzw. näherungsweise rekonstruiert wird, für jede verwendete Rampensteigung separat in den Frequenzbereich transformiert wird und anhand der in den erhaltenen Empfangsspektren zum jeweiligen Reflexionszentrum eines Objekts zugeordneten Spektrallinien derart ausgewertet wird, dass die Dopplerverschiebungen der jeweiligen Reflexionszentren der Objekte und damit die Relativgeschwindigkeit und der Abstand der detektierten Objekte berechnet wird.

Weiterhin ist es vorteilhaft, dass für jede Modulationsfunktion ein eigener Empfangskanal vorgesehen ist, wobei jeder Empfangskanal separat als hardwaremäßig eigenständiger Signalverarbeitungspfad ausgeführt sein kann oder aber alternativ dass alle Empfangskanäle in einem einzigen hardwaremäßig vorgesehenen Signalverarbeitungspfad verarbeitet werden und lediglich die Auswertealgorithmen die unterschiedlichen Empfangskanäle unterscheiden.

Von besonderer Bedeutung ist die Realisierung des erfindungsgemäßen Verfahrens in der Form eines Steuerelements, das für ein Steuer- und/oder Auswertegerät einer Objektdetektionseinrichtung zur Ermittlung der relativen Geschwindigkeit und dem Abstand erkannter Objekte, insbesondere in einem Kraftfahrzeug, vorgesehen ist. Dabei ist auf dem Steuerelement ein Programm gespeichert, dass auf einem Rechengerät, insbesondere auf einem anwendungsspezifischen integrierten Schaltkreis, einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein schematisches Blockschaltbild einer Ausführungsform der erfindungsgemäßen Vorrichtung,
- Figur 2: ein Frequenz-Zeit-Diagramm der erFmdungsgemäßen Modulationsfunktion,
- Figur 3: ein weiteres Frequenz-Zeit-Diagramm einer weiteren Modulationsfunktion des erfindungsgemäßen Verfahrens,
- Figur 4: eine Detailansicht eines Frequenz-Zeit-Diagramms einer erfindungsgemäßen Modulation mittels zweier zeitlich zueinander versetzter identischer Modulationsfunktionen,
- Figur 5: eine weitere Detailansicht eines Frequenz-Zeit-Diagramms einer erfindungsgemäßen Modulation mittels drei zeitlich zueinander versetzter identischer Modulationsfunktionen und
- Figur 6: eine dritte Detailansicht eines Frequenz-Zeit-Diagramms der erfindungsgemäßen Modulation mit zwei zeitlich sehr nah beieinanderliegenden, zeitlich zueinander versetzter identischer Modulationsfunktionen.

### Beschreibung von Ausführungsbeispielen

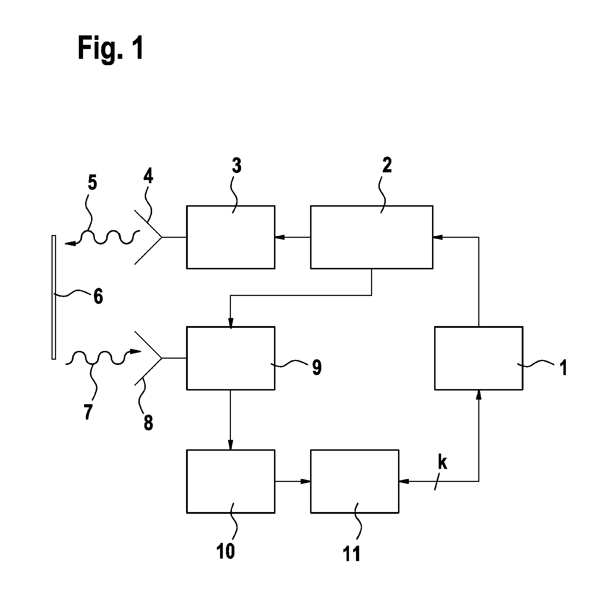

In Figur 1 ist ein schematisches Blockschaltbild der erfindungsgemäßen Vorrichtung dargestellt. Diese weist eine Einrichtung zur Steuerung und Signalauswertung 1 auf, die Ausgangssignale an eine Frequenzansteuerung 2 ausgibt. In der Frequenzansteuerungseinrichtung 2 werden aus den Steuersignalen der Steuerung und Signalauswertung 1 Modulationsfunktionen erzeugt, zwischen denen erfmdungsgemäß abwechselnd umgeschaltet wird und mit denen ein hochfrequentes Trägersignal f_{T}, das vorzugsweise im Mikrowellenfrequenzbereich liegt, moduliert wird. Dieses Sendesignal, das mittels mehrerer, zeitlich zueinander versetzter identischer Modulationsfunktionen erzeugt wird, indem zwischen diesen Modulationsfunktionen umgeschaltet wird, die das Trägersignal modulieren, wird am Ausgang des Senders 3 einer Senderantenne 4 zugeführt, die dieses Signal als Sendesignal 5 abstrahlt. Weiterhin wird das Sendesignal von der Frequenzansteuerung 2 an den Empfänger 9 weitergeleitet, da dieses zur Demodulation im Empfänger 9 bekannt sein muss. Das Sendesignal 5, das von der Sendeantenne 4 abgestrahlt wird, wird an Objekten 6 innerhalb des Sensorerfassungsbereichs reflektiert und als Empfangssignal 7 zurückreflektiert, wobei dieses Empfangssignal 7 durch die Relativgeschwindigkeit Vᵣₑₗ des bewegten, detektierten Objekts 6 eine Dopplerverschiebung erfährt. Das Empfangssignal 7 wird von einer Empfangsantenne 8 empfangen und dem Empfänger 9 zugeführt. Alternativ zur Ausführung dieser Vorrichtung, die getrennte Sende- und Empfangsantennen 4 und 8 aufweist, ist es auch möglich, ein monostatisches Sende- und Empfangsystem vorzusehen, das über eine einzige Antenne zum Senden und Empfangen verfügt, wobei in diesem Fall zusätzlich eine Sende- und Empfangsweiche vorgesehen sein muss, mittels der Sende- und Empfangssignale, die über die gleiche Antenne abgestrahlt bzw. empfangen werden, getrennt werden können. Im Empfänger 9 wird das Empfangssignal, das von der Empfangsantenne 8 zugeführt wird mit dem Sendesignal, das von der Frequenzansteuerung 2 bereitgestellt wird, gemischt und demoduliert, sodass dieses im anschließenden Block 10 einer Tiefpassfilterung und einer anschließenden Analog-Digital-Wandlung unterworfen wird. Am Ausgang des Blocks 10 liegt demnach ein demoduliertes, tiefpassgefiltertes Digitalsignal an, das einem Demultiplexer 11 zugeführt wird. Dieser Demultiplexer 11 teil das Ausgangssignal des Blocks 10 auf k Empfangskanäle auf, wobei diese k Empfangskanäle als separate, hardwaremäßig getrennte Signalverarbeitungspfade ausgeführt sein können oder aber alternativ mittels eines einzigen hardwaremäßig ausgestalteten Signalverarbeitungspfad gemeinsam verarbeitet werden können, wobei die k Kanäle lediglich durch Softwarealgorithmen implementiert sind, die die Empfangskanäle softwareseitig unterscheidet. Dabei ist die Anzahl der k Kanäle so bemessen, dass für jede Modulationsfunktion, der mehreren, identischen und zeitlich zueinander versetzter identischer Modulationsfunktionen, mit denen die Trägerfrequenz stückweise moduliert wird, ein eigener Auswertekanal im Empfangspfad vorgesehen ist. Die Signale der k Empfangskanäle werden vom Demultiplexer 11 der Steuer- und Signalauswerteeinrichtung 1 zugeführt, die aus den demodulierten, tiefpassgefilterten, digitalisierten und demultiplexten Daten für jeden Empfangskanal das jeweilige Empfangssignal näherungsweise rekonstruiert, für jede in der Modulationsfunktion verwendete Rampensteigung separat das Signal in den Frequenzbereich transformiert und anhand der in den erhaltenen Empfangsspektren zum jeweiligen Reflektionszentrum eines Objekts zugeordneten Spektrallinien gleicher Frequenz derart auswertet, dass die unterschiedlichen Dopplerverschiebungen der korrespondierenden Reflexionszentren der Objekte eindeutig bestimmt und hieraus die Relativgeschwindigkeit vᵣₑₗ und den Abstand d der detektierten Objekte 6 berechnet. Bei diesem Vorgehen muss beim Vorhandensein von mehr als einem Objekt innerhalb des Objekterfassungsbereichs während der Auswertung nicht zwischen realen Objekten und Scheinobjekten klassifiziert werden, wie es bei bekannten Systemen notwendig ist, wodurch ein sehr großer Rechenaufwand entfällt.

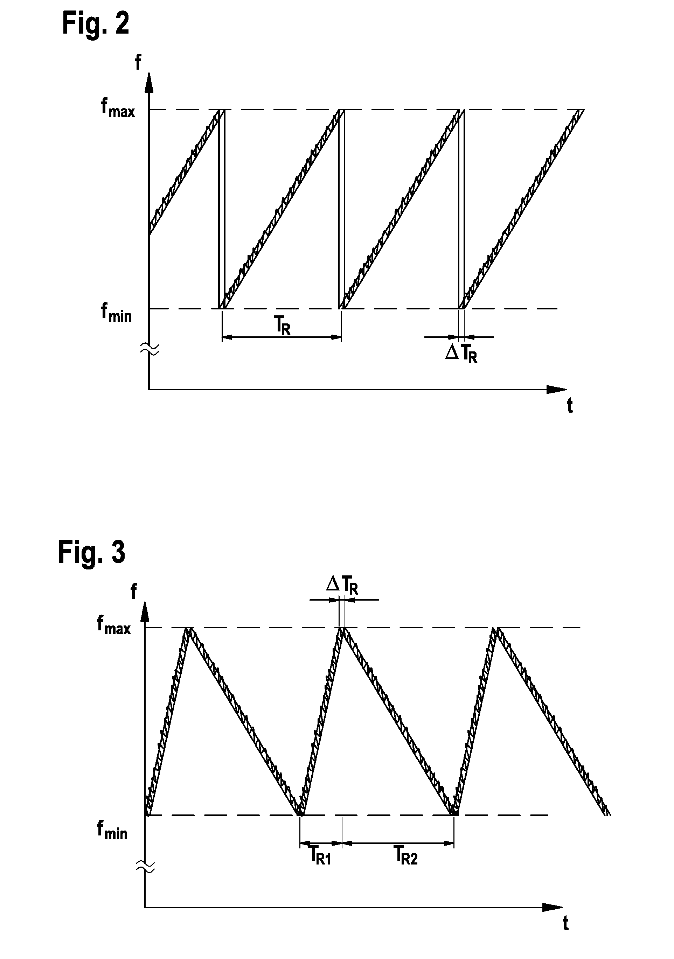

In Figur 2 ist eine sägezahnförmige Modulation mittels mehrerer, identischer und zeitlich zueinander versetzter Modulationsfunktionen dargestellt. Zu erkennen ist ein Diagramm, in dem die Frequenz f gegen die Zeit t aufgetragen ist. Hierbei wird die Trägerfrequenz f_{T} zwischen den Frequenzen fₘᵢₙ und fₘₐₓ moduliert. Weiterhin sind Modulationsfunktionen 12 zu erkennen, die sägezahnförmig von der unteren Grenzfrequenz fₘᵢₙ bis zur oberen Grenzfrequenz fₘₐₓ linear erhöht wird um anschließend wieder bei der unteren Grenzfrequenz fₘᵢₙ zu starten. Die Sägezahnsteigung ergibt sich hierbei aus der Differenzfrequenz zwischen fₘₐₓ und fₘᵢₙ sowie aus der Zeitdauer T_{R} einer Sägezahnrampe. Im dargestellten Beispiel sind zwei Modulationsfunktionen 12 dargestellt, die identische Verläufe aufweisen, jedoch zeitlich gegeneinander versetzt sind, wobei diese den zeitlichen Versatz ΔT_{R} aufweisen. Das auszusendende Signal entsteht nun derart, dass zwischen diesen beiden, zeitparallelen Modulationsfunktionen abwechselnd umgeschaltet wird und mit den Momentanfrequenzen der jeweiligen Einzelmodulationsfunktionen der Träger f_{T} stufenförmig moduliert und ausgesandt wird.

In Figur 3 ist eine weitere Modulationsmöglichkeit dargestellt, wobei in diesem Fall zwei Rampen mit unterschiedlichen Steigungen realisiert sind. Auch in Figur 3 ist die Frequenz f gegen die Zeit t aufgetragen, wobei die Modulationsfrequenz wiederum zwischen einer unteren Grenzfrequenz fₘᵢₙ und einer oberen Grenzfrequenz fₘₐₓ verändert wird. Im dargestellten Beispiel weisen die beiden identischen, jedoch zeitlich versetzten Modulationsfunktionen 12 keinen sägezahnförmigen Verlauf auf, sondern einen rampenförmigen Verlauf auf, wobei die ansteigenden Rampen eine betragsmäßig unterschiedliche Steigung aufweisen im Vergleich zu den abfallenden Rampen. Die jeweiligen Rampensteigungen werden durch die Differenz der Grenzfrequenzen fₘₐₓ-fₘᵢₙ sowie die Rampenzeiten T_{R1} und T_{R2} bestimmt, sodass zwischen zwei konstanten, vorbestimmten Rampensteigungen abgewechselt wird. Während die beiden Modulationsfunktionen 12 rampenförmig in ihrer Frequenz verändert werden wird das auszusendende Signal 5 derart gebildet, dass zwischen diesen beiden Funktionen abwechselnd umgeschaltet wird und die momentane Frequenz der jeweiligen Rampe stufenförmig ausgesandt wird.

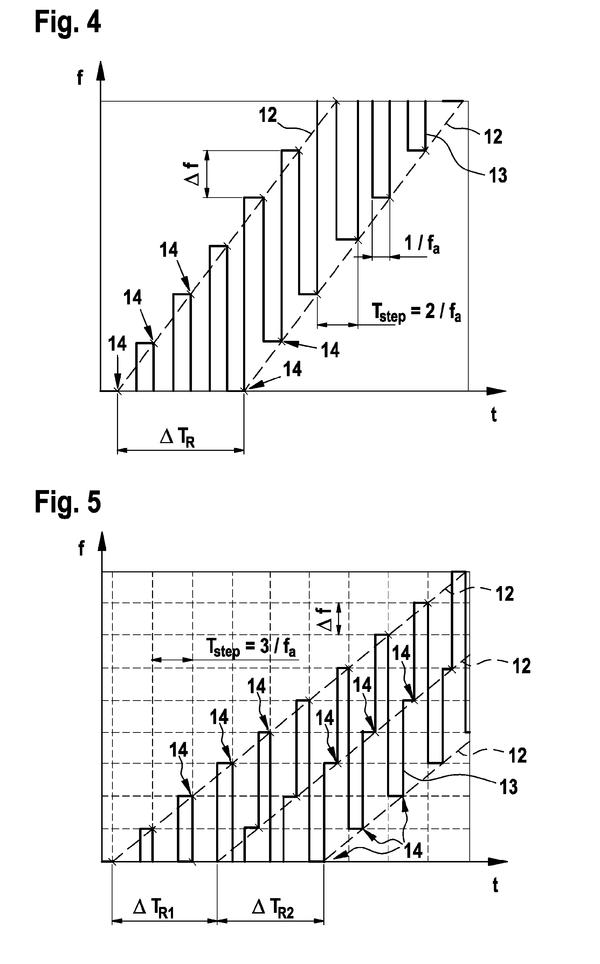

In Figur 4 ist eine Detailansicht einer derartigen Modulation aufgezeigt. Es ist wiederum ein Ausschnitt aus einem Frequenz-Zeit-Diagramm dargestellt, in dem die beiden ansteigenden Modulationsfunktionen 12, die gemäß Figur 2 oder 3 verändert werden, gestrichelt dargestellt sind. Das auszusendende Signal wird nun gebildet, indem gemäß Funktion 13 moduliert wird, wobei zwischen den beiden Modulationsrampen 12 abwechselnd hin und her geschaltet wird und die jeweils momentane Frequenz der Modulationsrampen 12 für die Zeitdauer T_{hold} konstant gehalten wird. Der zeitliche Abstand der beiden rampenförmigen Modulationsfunktionen 12 beträgt hierbei ΔT_{R} sowie die Frequenzdifferenz zweier nacheinander ausgesendeter Sendefrequenzen einer gleichen Modulationsfunktion 12 Δf. In diesem Ausführungsbeispiel sind die Zeitdauern zwischen dem Hin- und Herschalten der beiden Modulationsrampen 12 gleich lang, so dass die momentan ausgesendete Frequenz für die Zeitdauer T_{hold} konstant gehalten wird, wodurch sich eine Periodendauer des Hin- und Herschaltens von Tₛₜₑₚ=2*T_{hold} ergibt. Die sich hieraus ergebende gemultiplexte Modulationsfunktion 13 wird nun zur Modulation der Trägerfrequenz fₜ verwendet und auf diese Weise das auszusendende Signal 5 gebildet. Die Empfangssignale, die nach Reflexion des ausgesandten Signals 5 an Zielen empfangen werden, sind bezüglich des Sendesignals zum einen zeitverschoben, bedingt durch die Laufzeit des Signals sowie zusätzlich dopplerverschoben, bedingt durch die Relativgeschwindigkeit Vᵣₑₗ des detektierten Objekts 6. Die Zeitpunkte, zu denen das Empfangssignal abgetastet wird, sind durch die Punkte 14, die mittels Kreuzen dargestellt sind, eingezeichnet. Dabei wird jeweils am Ende der Intervalle mit konstanter Modulationsfrequenz das demodulierte Empfangssignal abgetastet. Es ergibt sich in diesem Ausführungsbeispiel entsprechend Figur 4 eine Abtastfrequenz von fₐ = 1/T_{hold}. Die Abtastfrequenz kann abweichend von der Darstellung in Figur 4 jedoch auch höher sein, also fₐ > 1/T_{hold}.

In Figur 5 ist eine äquivalente gemultiplexte Modulationsfunktion 13 dargestellt, die sich jedoch im Vergleich zum Ausführungsbeispiel der Figur 4 nicht nur aus zwei Modulationsfunktionen 12 zusammensetzt, sondern wie in Figur 5 dargestellt, aus drei Modulationsfunktionen 12 gebildet wird. In Figur 5 ist wiederum ein Ausschnitt aus einem Frequenz-Zeit-Diagramm dargestellt, bei dem drei Modulationsfunktionen 12 eingezeichnet sind, die gemäß Figur 2 oder Figur 3 sägezahnförmig oder rampenförmig verändert werden. Die Modulationsfunktionen 12 sind hierbei in ihrer Zeitfunktion identisch, jedoch zueinander in der Zeit verschoben, wobei die Zeitverschiebungen dieser Geraden 12 ΔT_{R1} bzw. ΔT_{R2} betragen. In dem dargestellten Beispiel sind diese beiden Zeitversätze der Modulationsfunktionen 12 gleich groß gewählt, also ΔT_{R1}=ΔT_{R2}, jedoch ist es auch möglich, diese beiden Zeitabstände unterschiedlich zu wählen, also ΔT_{R1} ≠ΔT_{R2}, wodurch sich eine modifizierte gemultiplexte Modulationsfunktion 13 ergibt. Die gemultiplexte Modulationsfunktion 13 wird nun gebildet, indem das auszusendende Signal aus zeitlich stückweise konstanten Frequenzen gebildet wird, indem zwischen den drei Modulationsfunktionen 12 gewechselt wird. Mittels Kreuzen ist wiederum eingezeichnet, zu welchen Zeitpunkten das Empfangssignal 7, das aus dem infolge der Laufzeit zeitverzögerten und infolge der Relativgeschwindigkeit Vᵣₑₗ des detektierten Objekts 6 dopplerverschobenen Sendesignals 5 besteht. Die Zeitpunkte 14 kennzeichnen hierbei die idealen Abtastzeitpunkte zur Weiterverarbeitung und Auswertung des Signals. Nimmt man die Abtastfrequenz der Abstastzeitpunkte 14 als fₐ an, so ergibt sich eine Periodendauer des Umschaltzyklusses von Tₛₜₑₚ=3/fₐ, wie es in Figur 5 eingezeichnet ist. Die Abtastfrequenz kann jedoch auch höher sein. Die Frequenzdifferenz zwischen zwei benachbarten Sendefrequenzen der gleichen Modulationsfunktionen 12 ergibt sich wie in Figur 4 eingezeichnet ist, zu Δf. Das sich hierdurch ergebende gemultiplexte Modulationssignal 13 wird zur Modulation der Trägerfrequenz fₜ verwendet, um das Sendesignal 5 zu bilden.

Erfindungsgemäß kann es weiterhin vorgesehen sein, dass bei Frequenzrampen mit unterschiedlichen Steigungen, wie es in Figur 3 beispielhaft durch ansteigende und abfallende Rampen mit jeweils unterschiedlichen Steigungen aufgezeigt ist, die Anzahl frequenzveränderlicher Modulationsfunktionen 12 variiert wird. So kann es vorgesehen sein, dass beispielsweise bei ansteigenden Rampen zwei frequenzveränderliche Modulationsfunktionen 12 verwendet werden, wie es in Figur 4 dargestellt ist, und bei abfallenden Frequenzrampen mit einer bezüglich der ansteigenden Frequenzrampe unterschiedlicher Steigung beispielsweise nur eine oder drei frequenzveränderliche Modulationsfunktionen 12 gemäß Figur 5 verwendet werden.

Zur korrekten Auslegung dieser Modulationsfunktion ist weiterhin zu beachten, dass die Zeitdauer T _{hold}, während der die Modulationsfrequenz konstant gehalten wird, derart bemessen ist, dass in dieser Zeit das Sendesignal die Laufzeit von der Sendeeinrichtung 4 zum detektierten Objekt 6 und zurück zur Empfangseinrichtung 8 zurücklegen kann, so dass während dieser Laufzeit keine Umschaltung der Modulationsfrequenz auf eine andere, frequenzveränderliche Modulationsfunktion 12 erfolgt, da ansonsten eine Signalauswertung erschwert würde. Weiterhin ist es möglich, dass die Umschaltezeitdauern 1/fₐ für jede frequenzveränderliche Modulationsfunktion 12 unterschiedlich gewählt wird, indem beispielsweise eine frequenzveränderliche Modulationsfunktion 12 länger ausgesandt wird als eine zeitlich verschobene frequenzveränderliche Modulationsfunktion 12.

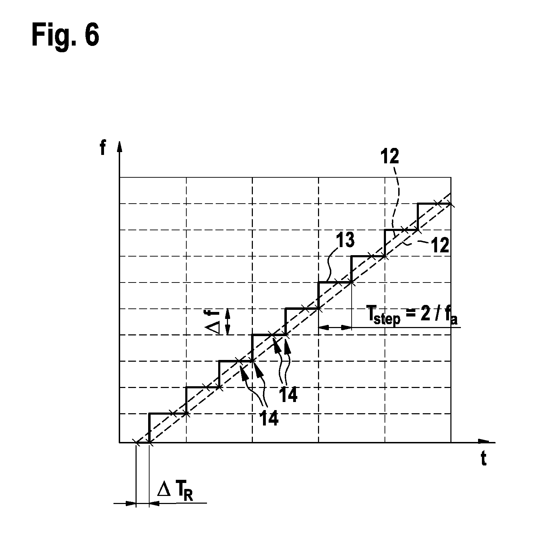

In Figur 6 ist ein weiterer Ausschnitt eines Frequenz-Zeit-Diagramms dargestellt, in dem wiederum zwei frequenzveränderliche Modulationsfunktionen 12 in Form zweier Geraden dargestellt sind, die eine mögliche Abwandlung der in den Figuren 4 und 5 beschriebenen Funktionen aufzeigt. Dabei ist der zeitliche Abstand dieser beiden, frequenzveränderlichen Modulationsfunktionen 12, also ΔT_{R} so klein gewählt, dass nach einer Frequenzerhöhung um die Frequenzdifferenz Δf eine erste Sendefrequenz ausgesandt wird, danach die frequenzveränderliche Modulationsfunktion 12 gewechselt wird, diese bereits schon die gleiche Sendefrequenz f vorgibt, dass während einer Periodendauer der Modulationsfunktionsumschaltung Tₛₜₑₚ nur einmal die Modulationsfrequenz verändert wird. In diesem Fall beträgt die Periodendauer der Umschaltung Tₛₜₑₚ=2/fₐ, wobei jedoch die Zeitdauern T_{hold}, während denen die Modulationsfrequenzen konstant bleiben, unterschiedlich lange sind. Auch hier kann die Abtastfrequenz f_{a,} abweichend von der Darstellung in Figur 6, höher sein, also fₐ > 2/T_{hold}.

Durch die Verwendung der beschriebenen Modulationsfunktionen zur Modulation eines Trägersignals f_{T} erhält man Empfangssignale, die einerseits laufzeitverschoben sind und zum anderen eine Dopplerverschiebung der Empfangsfrequenz infolge der Relativgeschwindigkeit der detektierten Objekte 6 aufweist. Beim Vorhandensein mehrerer Objekte im Sensorerfassungsbereich erhält man demnach in der Auswertung nach einer Tief passfilterung und einer Analog-Digital-Wandlung sowie einer Fouriertransformation in den Frequenzbereich Spektrallinien, wobei Objekte mit unterschiedlicher Relativgeschwindigkeiten vᵣₑₗ und/oder unterschiedlichem Abstand d meist separate Spektrallinien erzeugen und somit trennbar sind. Infolge des Umschaltens der Sendefrequenz gemäß der gemultiplexten Modulationsfunktion 13 entsprechend dem erfindungsgemäßen Verfahren ist es möglich, die jeweilige Dopplerfrequenz der mehreren, detektierten Objekte anhand ihrer korrespondierenden komplexwertigen Spektrallinien eindeutig zu bestimmen und hiermit mehrere Objekte gleichzeitig im Sensorerfassungsbereich zu detektieren und hinsichtlich ihres Abstands d und ihrer Relativgeschwindigkeit Vᵣₑₗ zum eigenen Fahrzeug auszuwerten.

Da die zeitlich versetzten Modulationsfunktionen die gleiche Steigung haben, besitzen die jeweils zu einem Reflexionsschwerpunkt zugeordneten Spektrallinien in den zu den Modulationsfunktionen korrespondierenden Spektren näherungsweise jeweils die gleiche Frequenz und können dadurch einfach dem betreffenden Objekt zugeordnet werden. Dadurch entfällt der beim klassischen FMCW-Verfahren mit Auswertung der Spektren aus mehreren Rampen unterschiedlicher Steigung notwendige kombinatorische Aufwand und die fehlerhafte Zuordnung der Spektrallinien zu Objekten (Scheinziele).

In Abhängigkeit von der Relativgeschwindigkeit des jeweiligen detektierten Objekts ergeben sich in den zu unterschiedlichen Modulationsfunktionen korrespondierenden Spektren für die zum Objekt zugeordneten Spektrallinien mit gleicher Frequenz jeweils unterschiedliche Phasenlagen, aus denen die Relativgeschwindigkeit des Objekts eindeutig bestimmt werden kann.

## Patentansprüche

1. Verfahren zur Entfernungs- und Geschwindigkeitsmessung mittels eines Mikrowellensignals, insbesondere für ein Kraftfahrzeug, wobei ein Trägersignal (f_{T}) mittels mehrerer frequenzveränderlicher Modulationsfunktionen (12) moduliert wird, dass die mehreren frequenzveränderlichen Modulationsfunktionen (12) identisch und zeitlich zueinander versetzt sind und dass das frequenzmodulierte Mikrowellensignal (13) derart gebildet wird, dass abwechselnd die momentane Frequenz einer der mehreren frequenzveränderlichen Modulationsfunktionen (12) ausgesandt wird, **dadurch gekennzeichnet, dass** die Sendefrequenz stückweise konstant (T_{hold})ist.

2. Verfahren nach Anspruch 1, **dadurch gekennzeichnet, dass** die Modulationsfunktionen (12) Geraden sind.

3. Verfahren nach Anspruch 1 oder 2, **dadurch gekennzeichnet, dass** die frequenzveränderlichen Modulationsfunktionen (12) zyklisch wiederholt werden (T_{R}; T_{R1}; T_{R2}).

4. Verfahren nach einem der Ansprüche 1 bis 3, **dadurch gekennzeichnet, dass** die frequenzveränderlichen Modulationsfunktionen (12) lineare, sich zyklisch wiederholende Rampen sind, die einen sägezahnförmigen Verlauf aufweisen.

5. Verfahren nach einem der Ansprüche 1 bis 3, **dadurch gekennzeichnet, dass** die frequenzveränderlichen Modulationsfunktionen (12) aus mehreren linearen Rampen mit unterschiedlicher Rampensteigung zusammengesetzt sind.

6. Verfahren nach einem der vorhergehenden Ansprüche, **dadurch gekennzeichnet, dass** die mehreren frequenzveränderlichen Modulationsfunktionen (12) zwei oder mehr zeitlich versetzte (ΔT_{R}, ΔT_{R1}, ΔT_{R2}) Modulationsfunktionen (12) sind.

7. Verfahren nach Anspruch 5 oder 6, **dadurch gekennzeichnet, dass** die Anzahl frequenzveränderlicher Modulationsfunktionen (12), zwischen denen innerhalb einer Rampe (T_{R}, T_{R1}, T_{R2}) zur Modulation des Mikrowellensignals umgeschaltet wird, variiert wird.

8. Verfahren nach einem der vorhergehenden Ansprüche, **dadurch gekennzeichnet, dass** die Zeitdauer (T_{hold}) zwischen dem Umschalten zwischen zwei Modulationsfunktionen (12) mindestens die Signallaufzeit ist, die das Sendesignal (5) benötigt, um von der Sendeeinrichtung (4) bis zur maximalen zu überwachenden Zielentfernung und zurück zur Empfangseinrichtung (8) zu gelangen.

9. Verfahren nach einem der vorhergehenden Ansprüche, **dadurch gekennzeichnet, dass** die Zeitdauern (T _{hold}) zwischen dem Umschalten zwischen unterschiedlichen Modulationsfunktionen (12), unterschiedlich sind

10. Verfahren nach einem der vorhergehenden Ansprüche, **dadurch gekennzeichnet, dass** das Empfangssignal abgetastet wird, auf mehrere Empfangskanäle (k) auf geteilt wird, das Empfangssignal des jeweiligen Empfangskanals geschätzt bzw. näherungsweise rekonstruiert wird, für jede verwendete Rampensteigung separat in den Frequenzbereich transformiert wird und anhand der in den erhaltenen Empfangsspektren zum jeweiligen Reflexionszentrum zugeordneten Spektrallinien derart ausgewertet wird, dass die Dopplerverschiebungen der jeweiligen Reflexionszentren (6) und damit die Relativgeschwindigkeit (vᵣₑₗ) und der Abstand (d) der detektierten Objekte (6) berechnet wird.

11. Vorrichtung zur Objektdetektion mittels eines Mikrowellensignals, insbesondere für ein Kraftfahrzeug, wobei eine Vorrichtung zur Erzeugung eines Trägersignals (3) vorgesehen ist, dass eine Einrichtung zur Generierung von mehreren frequenzveränderlichen Modulationsfunktionen (2) vorgesehen ist, mittels denen die Trägerfrequenz (f_{T}) modulierbar ist, wobei die mehreren frequenzveränderlichen Modulationsfunktionen (12) identisch und zeitlich zueinander versetzt (ΔT_{R}, ΔT_{R1}, ΔT_{R2}) sind und dass eine Umschalteinrichtung (3) vorgesehen ist, die das frequenzmodulierte Mikrowellensignal derart aus den Modulationsfunktionen (12) zusammensetzt, dass abwechselnd die momentane Frequenz einer der mehreren frequenzveränderlichen Modulationsfunktionen (12) ausgesandt wird.

12. Vorrichtung nach Anspruch 9, **dadurch gekennzeichnet, dass** für jede Modulationsfunktion ein eigener Empfangskanal vorgesehen ist.
